# EUROPÄISCHE PATENTANMELDUNG

(11) **EP 0 726 683 A2**
(43) Veröffentlichungstag der Anmeldung: **14.08.1996**
(21) Anmeldenummer: 96101680.5
(22) Anmeldetag: 06.02.1996
(51) Int. Cl.: H04Q 3/545

(54) **Verfahren zur Initialisierung von peripheren Einrichtungen durch eine programmgesteuerte Zentraleinrichtung eines Kommunikationssystems**

(30) Priorität: 10.02.1995 DE 19504488
(71) Anmelder: SIEMENS AKTIENGESELLSCHAFT, 80333 München (DE)
(72) Erfinder: Martschin, Daniel, Dipl.-Ing., D-44892 Bochum (DE); Moschner, Jürgen, Dipl.-Ing., D-44369 Dortmund (DE)

(57) **Zusammenfassung**

Das erfindungsgemäße Verfahren bezieht sich auf die Initialisierung von nacheinander angeordneten peripheren Einrichtungen (PE1..n), die über eine Schnittstelle (S) parallel mit einer Zentraleinrichtung (ZE) eines Kommunikationssystems verbunden sind. Hierbei wird ein Zugriffserlaubnissignal (zs) von peripherer Einrichtung (PE1..n) zu peripherer Einrichtung (PE1..n) weitergeleitet, wobei die durch das Zugriffserlaubnissignal (zs) angesprochene noch nicht initialisierte periphere Einrichtung (PE1..n) das Weiterleiten des Zugriffserlaubnissignals (zs) solange sperrt, bis der Zugriff dieser peripheren Einrichtung (PE1..n) auf die Schnittstelle (S) im Sinne einer Übernahme einer Adresse der peripheren Einrichtung (PE1..n) beendet ist. Eine maximale Konfigurationsfreiheit bezüglich des Typs und der Anzahl der peripheren Einrichtungen (PE1..n) wird durch das erfindungsgemäße Verfahren ermöglicht. Es kann zusätzlich eine ausgefallene periphere Einrichtung (PE1..n) lokalisiert werden und eine Initialisierung aller intakter peripherer Einrichtungen (PE1..n) unabhängig von der Position der ausgefallenen peripheren Einrichtung (PE1..n) erfolgen.

## Beschreibung

Die Erfindung betrifft ein Verfahren gemäß den Merkmalen des Oberbegriffs des Anspruchs 1.

Kommunikationssysteme bestehen üblicherweise aus einer Zentraleinrichtung - z.B. einem Mikroprozessorsystem - und peripheren Einrichtungen - z.B. Subprozessorsystemen für Facsimile oder Gebührenermittlung -, deren Anzahl und Art je nach Einsatzfall des Kommunikationssystems konfiguriert wird. Die Kommunikation zwischen Zentraleinrichtung und peripheren Einrichtungen erfolgt über Schnittstellen, die typischerweise Datenleitungen zum Lesen und Schreiben, Leitungen zur Meldungssignalisierung und Leitungen zur Unterbrechungssignalisierung umfassen. Die peripheren Einrichtungen müssen bei der Inbetriebnahme des Systems und bei Ausfall bzw. Neustart initialisiert werden.

Herkömmliche Kommunikationssysteme führen die Initialisierung durch, indem die Zentraleinrichtung unter Ausnutzung individueller Verbindungen zu jeder peripheren Einrichtung diese einzeln adressiert bzw. an einer Initialisierungsadressierungsleitung nur periphere Einrichtungen verschiedener Art angeschlossen werden können, so daß die Adressierung auch damit individuell bleibt. Der generelle Ablauf einer Initialisierung geht vom Rücksetzen auf eine allen peripheren Einrichtungen gemeinsame allgemeine Initialisierungsadresse aus und umfaßt nach dem individuellen Ansprechen einer peripheren Einrichtung über die genannte Initialisierungsadressierungsleitung ggf. deren Rückmeldung an die Zentraleinrichtung und daraufhin die Zuweisung einer individuellen Initialisierungsadresse von der Zentraleinrichtung über Datenleitungen der Schnittstelle an die periphere Einrichtung. Aus Allen M. Light, ,,Design a PCMCIA Add-In Card for the PCI Bus 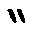 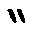 , Electronic Design, 21.November 1994, ist zur Auswahl einer individuellen Baugruppe ein Select Device Pin bekannt; jeder Baugruppe ist anhand des Steckplatzes eine schaltungstechnisch vorgegebene Ausgangsadresse zugewiesen, die programmtechnisch neu konfiguriert werden kann.

Für Kommunikationssysteme, die auf diese Weise die peripheren Einrichtungen initialisieren, bleibt die Anzahl und der Typ der anschließbaren peripheren Einrichtungen beschränkt, d.h. das Kommunikationssystem ist nicht beliebig erweiterbar. Die Einschränkungen ergeben sich insbesondere durch eine begrenzte Anzahl von Anschlüssen der Zentraleinrichtung.

Aus ,,Automatischen Daisy-Chain 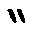 , elektro-anzeiger 46. Jahrgang, Nr. 9, September 1993, Seiten 62-63, ist es bekannt, daß Baugruppenkarten das Benutzungsrecht für einen Datenbus bzw. für eine Unterbrechung über eine Kettenleitung zugeteilt wird und diese Kettenleitung über sämtliche Baugruppenkarten hinweg durchgeschleift wird. Jeweils eine einzige der Baugruppenkarten kann damit durch eine System-Controller-Karte gezielt, ohne Verwendung von Adreßleitungen angesprochen werden, sofern eine Anforderung dafür vorliegt. Durch diese angesprochene Baugruppekarte werden daraufhin Daten über den Datenbus übermittelt. Es können jedoch nicht mehrere periphere Einrichtungen initialisiert werden, d.h. für eine spätere Adressierung über Adreßleitungen jeweils die individuellen Adressen zugewiesen werden.

Der Erfindung liegt die Aufgabe zugrunde, das bekannte Verfahren zur Initialisierung von peripheren Einrichtungen derart auszugestalten, daß eine beliebige Anzahl und Typenkombination von peripheren Einrichtungen konfigurierbar ist. Die Aufgabe wird ausgehend von einem Verfahren gemäß den Merkmalen des Oberbegriffs des Patentanspruchs 1 durch dessen kennzeichnende Merkmale gelöst.

Durch die Einführung eines Zugriffserlaubnissignals, das allen entsprechend einer Prioritätskette verbundenen peripheren Einrichtungen nacheinander, d.h. von peripherer Einrichtung zu peripherer und nicht parallel wie beim bekannten Verfahren, zugeführt wird, kann eine Vielzahl von peripheren Einrichtungen konfiguriert werden. Damit nur jeweils eine, noch nicht initialisierte periphere Einrichtung auf die gemeinsamen Leitungen der Schnittstelle Zugriff hat, wird das Weiterleiten von den jeweils durch die durch das Zugriffserlaubnissignal angesprochenen peripheren Einrichtungen zu den in der Prioritätskette nachgeordneten peripheren Einrichtungen gesperrt. Nicht nur die Anzahl sondern auch der Typ der angeschlossenen peripheren Einrichtungen ist uneingeschränkt wählbar, d.h. problemlos können periphere Einrichtungen gleichen Typs konfiguriert werden. Ein weiterer Vorteil des erfindungsgemäßen Verfahrens besteht darin, daß eine einzige Leitung ausreicht, um alle peripheren Einrichtungen während der Initialisierung anzusprechen. Dies bedeutet zusätzliche Einsparungen von Leitungen und Anschlüssen an der Zentraleinrichtung.

Damit ausgefallene oder inaktive periphere Einrichtungen das Ansprechen von peripheren Einrichtungen mit niederer Priorität nicht verhindern, lassen ausgefallene oder inaktive periphere Einrichtungen das Zugriffserlaubnissignal an nachfolgende periphere Einrichtungen passieren - Anspruch 4. Eine Kettenreaktion beim Ausfallen einer peripheren Einrichtung wird somit verhindert.

Für den Fall eines schaltungstechnischen Fehlers bzw. Hardwarefehlers einer peripheren Einrichtung, der die Weiterleitung des Zugriffserlaubnissignals blockiert, sieht eine vorteilhafte Weiterbildung des erfindungsgemäßen Verfahrens eine zweite allgemeine Adresse, eine Testadresse, vor - Anspruch 5. Zum Feststellen der Blockierung der Weiterleitung des Zugriffserlaubnissignals stellt die Zentraleinrichtung eine Testadresse über die Schnittstelle den peripheren Einrichtungen bereit, worauf alle peripheren Einrichtungen, bei denen das Zugriffserlaubnissignal nicht vorliegt, der Zentraleinrichtung das Nichtvorliegen des Zugriffserlaubnissignals über die Schnittstelle signalisieren und die Zentraleinrichtung daraufhin den blockierten peripheren Einrichtungen nacheinander eine individuelle Initialisierungsadresse übermittelt. Somit sind auch alle peripheren Einrichtungen initialisierbar, die in der Prioritätskette nach der hardwaremäßig ausgefallenen peripheren Einrichtung liegen. Die Zentraleinrichtung kann damit alle peripheren Einrichtungen bis auf die ausgefallene in Betriebsbereitschaft versetzen.

Weitere vorteilhafte Weiterbildungen bezüglich einer Anordnung zur Durchführung des beschriebenen Initialisierungsverfahrens sind den weiteren Ansprüchen zu entnehmen. Eine Ausführungsform zur Auswertung bzw. Steuerung des Zugriffserlaubnissignales durch jede periphere Einrichtung beinhaltet nur ein einziges Logikelement und zwei Widerstände, wodurch auf vorteilhafte Weise der zusätzliche Schaltungsaufwand für jede periphere Einrichtung auf ein Minimum reduziert ist.

Die Erfindung wird im folgenden anhand eines Blockschaltbildes näher erläutert.

Der Datenaustausch zwischen einer Zentraleinrichtung ZE und peripheren Einrichtungen PE1..n erfolgt über eine Schnittstelle S, die parallel angeordnete Leitungen - nicht im einzelnen dargestellt - zum Lesen und Schreiben von Daten, zur Synchronisation der peripheren Einrichtungen, zur Signalisierung eines Datenaustausches und zur Signalisierung einer Unterbrechung vorsieht. Alle peripheren Einrichtungen PE1..n sind parallel mit der Schnittstelle S verbunden.

Zur Initialisierung, d.h. Zuweisung jeweils einer individuellen Adresse ii, durch die die peripheren Einrichtungen PE1..n im weiteren Betrieb des Kommunikationssystems individuell ansprechbar sein werden, ist ein zusätzliches Signal, das Zugriffserlaubnissignal zs, vorgesehen. Dieses Zugriffserlaubnissignal zs ist "0"-aktiv und wird in der Zentraleinrichtung ZE durch ständiges Anlegen von "0"-Potential an einen Ausgang A gebildet. Jeder peripheren Einrichtung PE1..n ist ein durch ein ODER-Gatter gebildetes Logikelement LE1..n zugeordnet. Jeweils ein erster Eingang E11..n des Logikelementes LE1..n ist mit jeweils einem Ausgang A1..n des Logikelements LE1..n-1 der vorhergehenden peripheren Einrichtung PE1..n-1 und einem Eingang EP1..n der peripheren Einrichtung PE1..n verbunden. Bei der ersten peripheren Einrichtung PE1 ist der Eingang E11 mit dem Ausgang A der Zentraleinrichtung ZE, in der an den Ausgang A ein "0"-Pegel gelegt ist, verbunden. Zusätzlich ist jeweils der erste Eingang E11..n über jeweils einen Widerstand Ra1..n auf eine Betriebsspannung von +5 V voreingestellt. Jeweils ein zweiter Eingang E21..n der Logikelemente LE1..n ist jeweils mit einem Ausgang AP1..n der peripheren Einrichtungen PE1..n und über jeweils einen Widerstand Rb1..n mit *"*0*"*-Potential verbunden. Die Widerstände haben beispielhaft einen Nennwert von 10 kΩ. Der Ausgang An des Logikelements LEn der n-ten peripheren Einrichtung PEn ist unbeschaltet.

Im folgenden wird die prinzipielle Funktionsweise der Logikelemente LE1..n zusammen mit den peripheren Einrichtungen PE1..n und anschießend die Initialisierung beispielhaft für die peripheren Einrichtungen PE1..n anhand der x-ten peripheren Einrichtung PEx erläutert.

Das Vorliegen des Zugriffserlaubnissignals zs wird von der peripheren Einrichtung PEx und dem zugeordneten Logikelement LEx erkannt. Ist das ankommende Zugriffserlaubnissignal aktiv ("0"-Potential) und nimmt die periphere Einrichtung PEx keine Sperrung des Zugriffserlaubnissignals zs vor, d.h. gibt die periphere Einrichtung PEx am Ausgang APx ein eine binäre "0" repräsentierendes Potential ab, wird das Zugriffserlaubnissignal zs weitergeleitet - am Ausgang des Logikelementes LEx liegt folglich ein eine binäre "0" repräsentierendes Potential an. Zur Sperrung des Zugriffserlaubnissignals zs für die folgenden peripheren Einrichtungen PEx+1..n wird in der peripheren Einrichtung PEx an den Ausgang APx ein eine binäre "1" repräsentierendes Potential gelegt, das damit auch am Ausgang Ax des Logikelementes LEx anliegt. Diese Verarbeitung des Zugriffserlaubnissignals zs durch die periphere Einrichtung PEx sichert damit, daß keine Beeinflussung, d.h. eventuelle Sperrung, des Signals auftritt, wenn die periphere Einrichtung PEx ausgefallen oder inaktiv ist. Dies ist möglich, da in diesem Fall der Widerstand Rbx den ersten Eingang E1x des Logikelementes LEx auf *"*0*"*-Potential voreinstellt und ein Passieren des Zugriffserlaubnissignals zs durch die ausgefallene periphere Einrichtung PEx.

Die Initialisierung läuft wie folgt ab. Nach dem Rücksetzen aller peripheren Einrichtungen PE1..n oder auch nur einer einzelnen peripheren Einrichtung PE1..n sind die rückgesetzten peripheren Einrichtungen PE1..n über die allgemeine Initialisierungsadresse ai ansprechbar. Die Auswahl einer einzelnen rückgesetzten, d.h. noch nicht initialisierten, peripheren Einrichtung PE1..n - im Ausführungsbeispiel die x-te periphere Einrichtung - ist damit nur mit Hilfe des Zugriffserlaubnissignales zs möglich, wobei das normalerweise ständig von peripherer Einrichtung zu peripherer Einrichtung durchgeschaltete Zugriffserlaubnissignal während der Initialisierung zuerst von allen peripheren Einrichtungen PE1..n gesperrt wird und dann von den bereits initialisierten peripheren Einrichtungen PE1..n wieder frei gegeben wird. So bleibt das Zugriffserlaubnissignal zs ab der aktuell zu initialierenden peripheren Einrichtung PEx für die jeweils folgenden peripheren Einrichtungen PEx+1..n gesperrt.

Nach Anlegen der allgemeinen Initialisierungsadresse ai an die Schnittstelle S durch die Zentraleinrichtung ZE und den üblichen begleitenden Meldungssignalisierungen sprechen alle rückgesetzten peripheren Einrichtungen PE1..n an. Dabei sperrt jede angesprochene periphere Einrichtung PE1..n das Weiterleiten des Zugriffserlaubnissignal zs. Gemäß der Prioritätskette liegt das Zugriffserlaubnissignal nur bei peripheren Einrichtung vor, deren vorhergehende peripheren Einrichtung PEx-1 bereits initialisiert wurden bzw. das Zugriffserlaubnissignal weitergeleitet haben. Die periphere Einrichtung PEx ist folglich die einzige periphere Einrichtung PE1..n, die der Zentraleinrichtung ZE über die Schnittstelle S Empfangsbereitschaft signalisiert und die die im nächsten Zyklus von der Zentraleinrichtung ZE gesendete und für die periphere Einrichtung PEx bestimmte individuelle Initialisierungsadresse ii übernimmt. Nach Empfang der individuellen Initialisierungsadresse ii leitet die neu initialisierte periphere Einrichtung PEx das Zugriffserlaubnissignal zs an die folgenden peripheren Einrichtungen PEx+1..n weiter. Die Initialisierung der folgenden peripheren Einrichtungen PEx+1..n erfolgt auf analoge Weise. Reagiert keine periphere Einrichtung PE1..n auf die allgemeine Initialisierungsadresse ai, sind alle peripheren Einrichtungen PE1..n initialisiert. Die Zentraleinrichtung ZE muß dabei die Wahl der richtigen Reihenfolge der individuellen Initialisierungsadressen ii entsprechend der Reihenfolge der peripheren Einrichtungen PE1..n bzw. die Lokalisierung einer einzelnen zu initialisierenden peripheren Einrichtung PEx und Bestimmung ihrer individuellen Initialisierungsadresse ii vornehmen.

Im Zusammenhang mit der Initialisierung nutzen weitere Kontrollfunktionen das Zugriffserlaubnissignal zs. Die Zentraleinrichtung ZE gibt zur Lokalisierung einer fehlerhaften peripheren Einrichtung, z.B. die durch Hardwarefehler ausgefallene x-te periphere Einrichtung PEx, eine Testadresse ti aus. Die Testadresse ti wird von den peripheren Einrichtungen PEx+1..n über die Schnittstelle S quittiert, die zurückgesetzt sind und für die kein Zugriffserlaubnissignal zs vorliegt. Das Zugriffserlaubnissignal zs liegt in den der fehlerhaften peripheren Einrichtung PEx folgenden peripheren Einrichtungen PEx+1..n nicht vor. Jeweils ein Ausgang der peripheren Einrichtung PE1..n, der mit der zur Schnittstelle S gehörigen Schreibleitung (für die peripheren Einrichtungen PE1..n) verbunden ist, ist als eine Transistorschaltung mit offenen Kollektor - open-collector - ausgebildet. Jede periphere Einrichtung PE1..n quittiert damit über diesen Ausgang ein *"*1*"*-Potential, solange nicht explizit ein *"*0*"*-Potential von einer peripheren Einrichtung PE1..n angelegt wird. Die Zentraleinrichtung ZE kann das Vorliegen einer Quittierung der Testadresse ti mit einem *"*0*"*-Potential durch eine periphere Einrichtung PE1..n somit trotz ausgefallener peripherer Einrichtungen PE1..n erkennen. Die Zentraleinrichtung ZE bestimmt aus der Anzahl der bereits initialisierten peripheren Einrichtungen PE1..x-1 die fehlerhafte periphere Einrichtung PEx. Anschließend wird durch die Zentraleinrichtung ZE die Initialisierung der peripheren Einrichtungen PEx+1..n beginnend mit der der fehlerhaften peripheren Einrichtung PEx folgenden peripheren Einrichtung PEx+1 gestartet.

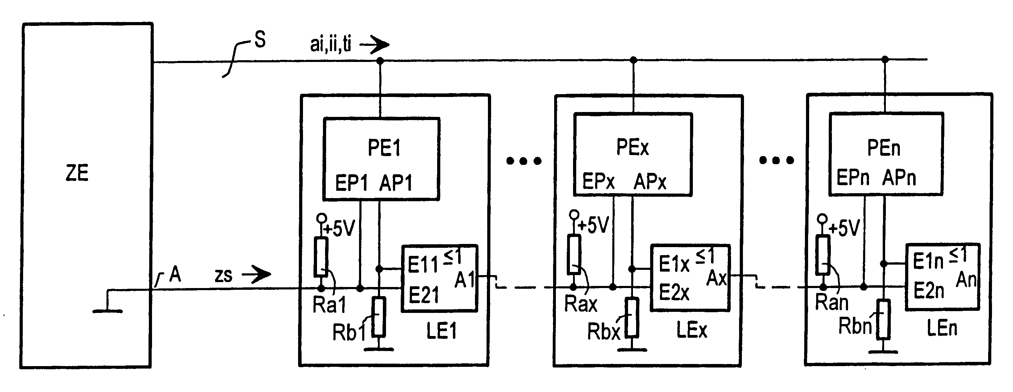

## Patentansprüche

1. Verfahren zur Initialisierung von peripheren Einrichtungen (PE1..n) durch eine programmgesteuerte Zentraleinrichtung (ZE) eines Kommunikationssystems mit einer Schnittstelle (S)
- zum Lesen und Schreiben von Daten,
- zur Synchronisation der peripheren Einrichtungen (PE1..n),
- zur Signalisierung einer Meldung und
- zur Signalisierung einer Unterbrechung, die parallel mit allen peripheren Einrichtungen (PE1..n) verbunden ist,
bei dem
- die peripheren Einrichtungen (PE1..n) gemäß einer Prioritätskette in Bezug auf ein Zugriffserlaubnissignal (zs) nacheinander angeordnet sind und
- eine das Zugriffserlaubnissignal (zs) empfangende periphere Einrichtung (PE1..n) das Zugriffserlaubnissignal (zs) bewertet und in Abhängigkeit vom Bewertungsergebnis an die jeweils darauffolgende periphere Einrichtung (PE1..n) weiterleitet,
**dadurch gekennzeichnet,**
- daß die zumindest eine zu initialisierende periphere Einrichtung (PEx) nach Anfrage (ai) durch die programmgesteuerte Zentraleinrichtung (ZE) über die Schnittstelle (S) die Initialisierungsinformation (ii) anfordert,
- daß die programmgesteuerte Zentraleinrichtung (ZE) an der Schnittstelle (S) eine die periphere Einrichtung (PEx) identifizierende Initialisierungsinformation (ii,..) bereitstellt,
- daß das Zugriffserlaubnissignal (zs) aktiviert ist und
- daß eine durch das Zugriffserlaubnissignal (zs) angesprochene noch nicht initialisierte periphere Einrichtung (PEx) das Weiterleiten des Zugriffserlaubnissignals (zs) an die folgenden peripheren Einrichtungen (PEx+1..n) solange sperrt, bis der Zugriff dieser peripheren Einrichtung (PEx) auf die Schnittstelle (S) zur Übernahme der Initialisierungsinformation (ii,..) beendet ist.

2. Verfahren nach Anspruch 1,
**dadurch gekennzeichnet,**
daß nach der Freigabe des Zugriffserlaubnissignals (zs) durch die vorhergehend initialisierte periphere Einrichtung (PEx) die jeweils in der Prioritätskette folgende noch nicht initialisierte periphere Einrichtung (PEx+1) auf die gleiche Weise ohne weitere Beeinflußung des Zugriffserlaubnissignals (zs) durch die programmgesteuerte Zentraleinrichtung (ZE) initialisiert wird.

3. Verfahren nach Anspruch 1 oder 2,
**dadurch gekennzeichnet,**
- daß für Initialisierung mindestens einer peripheren Einrichtung (PEx) die Zentraleinheit (ZE) eine allgemeine Initialisierungsadresse (ai), auf die nur rückgesetzte periphere Einrichtungen (PEx) reagieren, über die Schnittstelle (S) den peripheren Einrichtungen (PE1..n) bereitstellt,
- daß die durch ein Zugriffserlaubnissignal (zs) angesprochene noch nicht initialisierte periphere Einrichtung (PEx) der Zentraleinrichtung (ZE) Empfangsbereitschaft signalisiert und das Zugriffserlaubnissignal (zs) für die folgenden peripheren Einrichtungen (PEx+1..n) sperrt,
- daß die Zentraleinrichtung (ZE) eine der zu initialisierenden peripheren Einrichtungen (PEx) zugehörige individuelle Initialisierungsadresse (ii) über die Schnittstelle (S) der peripheren Einrichtung (PEx) bereitstellt, die von der peripheren Einrichtung (PEx) eingelesen wird, und
- daß die periphere Einrichtung (PEx) daraufhin das Zugriffserlaubnissignal (zs) an die jeweils folgende periphere Einrichtung (PEx+1) weiterleitet.

4. Verfahren nach Anspruch 3,
**dadurch gekennzeichnet,**
- daß bei Initialisierung aller peripherer Einrichtungen (PE1..n) die Zentraleinrichtung (ZE) die individuellen Initialisierungsadresse (ii) in der Reihenfolge der peripheren Einrichtungen (PE1..n) gemäß der Prioritätskette bereitstellt und
- daß bei Initialisierung einer einzelnen rückgesetzten peripheren Einrichtung (PEx) die Zentraleinrichtung (ZE) die der peripheren Einrichtung (PEx) zugehörige individuelle Initialisierungsadresse (ii) bereitstellt.

5. Verfahren nach einem der Ansprüche 1 bis 4,
**dadurch gekennzeichnet,**
daß das Zugriffserlaubnissignal (zs) inaktive und ausgefallene periphere Einrichtungen (PEx) passiert.

6. Verfahren nach einem der Ansprüche 1 bis 5,
**dadurch gekennzeichnet,**
- daß zum Feststellen der Blockierung der Weiterleitung des Zugriffserlaubnissignals (zs) die Zentraleinrichtung (ZE) eine Testadresse (ti) über die Schnittstelle (S) den peripheren Einrichtungen (PE1..n) bereitstellt, worauf alle peripheren Einrichtungen (PEx), bei denen das Zugriffserlaubnissignal (zs) nicht vorliegt, der Zentraleinrichtung (ZE) das Nichtvorliegen über die Schnittstelle (S) signalisieren und
- daß die Zentraleinrichtung (ZE) daraufhin den blockierten peripheren Einrichtungen (PEx) nacheinander eine individuelle Initialisierungsadresse (ii) übermittelt.

7. Anordnung zur Initialisierung von peripheren Einrichtungen (PE1..n) durch eine programmgesteuerte Zentraleinrichtung (ZE) eines Kommunikationssystems über eine Schnittstelle (S)
- zum Lesen und Schreiben von Daten,
- zur Synchronisation der peripheren Einrichtungen (PE1..n),
- zur Signalisierung einer Meldung und
- zur Signalisierung einer Unterbrechung
die parallel mit allen peripheren Einrichtungen (PE1..n) verbunden ist und bei der die peripheren Einrichtungen (PE1..n) gemäß einer Prioritäts kette in Bezug auf ein Zugriffserlaubnissignal (zs) nacheinander angeordnet sind,
- wobei eine das Zugriffserlaubnissignal (zs) empfangende periphere Einrichtung (PE1..n) das Zugriffserlaubnissignal (zs) bewertet und in Abhängigkeit vom Bewertungsergebnis an die jeweils darauffolgende periphere Einrichtung (PE1..n) weiterleitet,
**dadurch gekennzeichnet,**
- daß die programmgesteuerten Zentraleinrichtung (ZE) derart ausgestaltet ist, daß auf der Schnittstelle (S) eine die periphere Einrichtung (PEx) identifizierende Initialisierungsinformation (ii,..) bereitstellt wird und
- daß Mittel (LE1..n) in den peripheren Einrichtungen (PEx+1..n) vorgesehen sind, so daß die durch das Zugriffserlaubnissignal (zs) angesprochene noch nicht initialisierte periphere Einrichtung (PEx) das Weiterleiten des Zugriffserlaubnissignals (zs) an die folgenden peripheren Einrichtungen (PEx+1..n) solange sperrt, bis der Zugriff dieser periphere Einrichtung (PEx) auf die Schnittstelle (S) zur Übernahme der Initialisierungsinformation (ii,..) beendet ist.

8. Anordnung nach Anspruch 7,
**dadurch gekennzeichnet,**
- daß ein jeder peripheren Einrichtung (PE1..n) zugehöriges Logikelement (LE1..n) mit einem ersten Eingang (E11..n) mit einem das ankommende Zugriffserlaubnissignal (zs) führenden Ausgang eines Logikelements (LE1..n) der vorgeordneten peripheren Einrichtung (PE1..n) und einem Eingang (EP1..n) der peripheren Einrichtung (PE1..n) verbunden ist, wobei der Eingang (E11..n) auf einen vom aktiven Signalpegel des Zugriffserlaubnissignals (zs) abweichenden Pegel voreingestellt ist,
- daß ein zweiter Eingang (E21..n) des Logikelementes (LE1..n) mit einem Ausgang (AP1..n) der peripheren Einrichtung (PE1..n) verbunden ist, wobei die periphere Einrichtung (PE1..n) über den Ausgang (AP1..n) das abgehende Zugriffserlaubnissignal (zs) sperren kann, und
- daß der das für die folgenden peripheren Einrichtungen (PE1..n) abgehende Zugriffserlaubnissignal (zs) führenden Ausgang des Logikelementes (LE1..n) mit einem Eingang der folgenden peripheren Einrichtung (PE1..n) verbunden ist.
